# EUROPEAN PATENT APPLICATION

(11) **EP 1 257 118 A1**
(43) Date of publication of application: **13.11.2002**
(21) Application number: 01830300.8
(22) Date of filing: 11.05.2001
(51) Int. Cl.: H04N 5/33

(54) **Device for implementation of a temperature reference in a camera for detecting infrared radiation, and a camera comprising said device**

(71) Applicant: FINMECCANICA S.p.A., 00195 Roma (IT)
(72) Inventor: Pieri, Silvano, 50019 Sesto Fiorentino, Firenze (IT); Olivieri, Monica, 50013 Campi Bisenzio, Firenze (IT)
(74) Representative: Mannucci, Michele

(57) **Abstract**

In an infrared-radiation detecting camera the following are provided: an optical path with at least one collimator (5) and one scanning mirror (7); infrared-radiation detecting means (11); and at least one temperature reference with a radiating surface (31A) at a controlled temperature. The temperature reference comprises a reflecting prism (17) which receives a radiation emitted by the radiating surface and reflects it in the optical path towards the detecting means (11).

## Description

### Technical field

The present invention relates to a device that implements a temperature reference to be used for electronic treatment of images obtained from cameras that detect infrared radiation, commonly referred to as "IR cameras".

In particular, but not exclusively, this type of temperature reference is used in IR cameras of the parallel optical-scanning type.

The invention also relates to a camera for detecting infrared radiation (hereinafter referred to as IR radiation) with at least one device that implements a temperature reference.

### State of the art

The most widespread technique for detecting infrared radiation in the 8 to 12-micrometers wavelength band is based upon a one-dimensional array of elements sensitive to said radiation, hereinafter referred to generically as IR sensor. An optical focusing system, also equipped with a scanning device, forms an infrared image on the array, which detects the details (pixels) of the temperature distribution thereof along a line. The scanning device causes a rapid and rhythmical displacement of the infrared image in the transverse direction with respect to the array, effecting detection of the entire image in time. An apparatus of this type is described in WO-A-9736420.

Electronic treatment of the signals detected requires comparison of the latter with a known temperature reference, in order to be able to calibrate and equalize the response of each individual detecting element so that, to equal intensity on the points of the infrared image detected by each element, there corresponds an equal electrical signal.

Usually the aforesaid temperature references are uniform surfaces emitting infrared radiant energy, which are set at the sides of the image to be detected, in an intermediate focal plane, within the optical system.

Typically, the optical system is made up of the following: an objective, a collimator, an optical scanning device, and a second objective. The first objective forms an image, creating the intermediate focal plane referred to above. The collimator gathers the radiation from the intermediate focal plane, which, via the scanning device and the second objective is re-focused on the array of detectors.

The infrared radiation emitted by the references is collected by the collimator itself and detected by the array at the end of each scan of the image.

In order for the calibration action to be effective it is necessary for the reference temperature to be accurately controlled and kept always close to the average temperature of the image to be detected. When the reference temperature becomes very low, the humidity present in the air solidifies to produce ice that may damage the reference itself. For this reason, the device must be kept in an insulated environment, without humidity. This requirement is typically the source of technical complications on account of the problems involved in obtaining such an insulated environment.

Another source of problems in the implementation of temperature references is the uniformity of the emitting surface. Since the temperature reference is detected at the ends of the image-scanning stroke, by means of an appropriate additional scanning stroke, it is necessary for the reference to have a very precise and clear edge and for the latter to be positioned in a focal plane, as mentioned previously. In this way the additional stroke may be very small, to the advantage of the scanning efficiency. In these conditions, if the surface of the reference is not uniform, its irregularities are detected by the elements of the array and erroneously interpreted as diversity of electrical response of the elements of the array.

In the infrared-detecting camera described in WO-A-9736420, the temperature references are constituted by two laminas kept at a controlled temperature and located in the focal plane of the entrance objective of the device, inside a space closed by two optical components that are traversed by the IR radiation that is to be detected. Gathered together in this same space are also heat pumps and temperature sensors associated to the laminas. The space is therefore of considerable dimensions and entails a number of problems involved in keeping it free of humidity.

In addition, this space is integral with active components of the collimator, which are mobile to enable focusing of the infrared image. The entire ensemble made up of the temperature references and the means for keeping the latter at a controlled temperature must consequently be mobile. This entails problems of dissipation of heat by the heat pumps associated to the temperature references and limits the dynamic response of the references themselves.

Further examples of IR cameras are described in GB-A-2100548, GB-B-1562872, EP-A-0459010, GB-B-1418919, EP-A-0365948, and US-A-4280050.

In some cases, as described for example in US-A-4983837 and US-A-4419692, the temperature reference is obtained by projecting the thermal radiation generated by a controlled-temperature source into the optical path of the beam coming from the scene that is to be detected by the array of detectors of the detecting camera. For this purpose, an arrangement of reflecting mirrors is envisaged. The known configurations of this type are particularly complex and cumbersome and do not solve the problem of the control of humidity in the environment in which the sources are arranged. In addition, an effective way to enable focusing of the IR image is not provided, which takes into account the presence of temperature references.

### Objects and summary of the invention

Object of the present invention is to provide a device for generating a temperature reference in an IR camera which is simpler to install and is more effectively protected against humidity.

Another object of the present invention is to provide a camera for detecting IR radiation with at least one temperature reference, which presents higher efficiency and in which the temperature reference may be more easily maintained in conditions of controlled humidity.

The above and further objects and advantages, which will appear clearly to a person skilled in the art from the ensuing text, are basically obtained by causing the radiation coming from a radiating surface kept at a controlled temperature to be deviated within an optical detection path by means of a reflecting element consisting of a prism. The latter receives the radiation to be reflected through one of its faces and - by means of a total reflection on one of its own internal faces - deviates it in the direction of the detecting means present in the thermal camera.

As will emerge clearly from what follows, starting from the above configuration it is possible to obtain a series of advantages.

In fact, in the first place, the radiating surface is no longer necessarily set on the optical path of the image to be detected by means of the IR camera, and consequently it is no longer necessary to provide, along said path, a closed space within which the temperature references, heat pumps and corresponding sensors are to be housed. This increases the efficiency of the detecting camera because the number of components along the path of the beam to be detected is reduced.

The reference radiation emitted by the radiating surface is collected by the prism and, through the latter, by means of a number of reflections and refractions, is transmitted towards the array of detectors forming the IR sensor of the camera. The particular shape of the prism means that said radiation particularly concentrates in the proximity of the dihedral edge of the prism, in such a way that detection takes place within a very small sweep of an additional scanning stroke of the scanning system of the IR camera.

Basically, with the above embodiment of the temperature reference, the part that must be protected in order to prevent formation of ice lies outside the area where the image is formed (focal plane), which can remain in a non-protected area, with consequent constructional simplification and increase in the efficiency of the detecting camera.

Lying on the focal plane there is the surface of the dihedral angle of the prism, which is shiny and transparent and cannot cause lack of uniformity. The radiating surface of the reference is at a distance from the focal plane, so that it is out of focus. In this way, each detecting element of the array of detectors receives the radiation coming from a large area of the radiating surface of the reference, so that the irregularities present in it are averaged out and compensated.

In addition, it is possible to set the prism with its reflecting surface - which deviates the radiation coming from the radiating surface in the optical path towards the array of detectors - on the focal plane of the entrance objective, maintaining, instead, the radiating surface and the corresponding members associated thereto downstream of the focal plane with respect to the incoming radiation that passes through the entrance objective. This means that the parts making up the temperature reference will not encroach on the region of the entrance objective. In this way, it is possible to use a commercially available component as entrance objective.

According to a particularly advantageous embodiment of the invention, the reflecting prism may be integral with the mobile optical elements so that it will constantly stay in the focal plane, whilst the radiating surface, the heat pump and the temperature sensor may be set in a fixed container. In this way, in addition to simplification of installation of the temperature reference, there is a more efficient dissipation of heat outwards by the heat pump, without this heat flow affecting the temperature of the references. This means that a temperature reference presenting high dynamics can be achieved, i.e., one in which the temperature of the radiating surface can vary rapidly. This is important because the temperature reference must be kept at a temperature that depends upon the average temperature of the scene that is being observed by the detecting camera. A temperature reference with high dynamics enables - at least in some applications - provision of just one temperature reference instead of two as usually is the case.

The radiating surface has dimensions large enough for emission of a beam of thermal radiation which reaches the reflecting prism in any position that the latter may assume as a consequence of the focusing movement. In this case, there is an additional window on the optical path of the temperature reference, but the optical path of the image from the outside scene to the array of detectors remains unaltered. In other words, along said path it is not necessary to provide any additional windows for delimiting a vacuum space or a controlled-atmosphere space for housing the radiating surface. In this way, the number of optical components that can absorb the radiation coming from the scene under observation, and hence components that can reduce the efficiency of the detection system, is limited. On the other hand, the presence of an additional window along the path of the radiation coming from the radiant surface of the temperature reference and directed towards the prism does not constitute a drawback, but rather represents an advantage since it enables reduction of the degree of cooling of the radiant surface.

Even though the configuration with the radiant surface mounted on a fixed part of the detecting camera is particularly to be preferred for the greater advantages achieved, there is not to be ruled out the possibility of said surface being integral with the respective prism, and hence translating with the prism integrally with possible optical elements of the detecting camera that are provided with a movement for focusing.

In either case, the radiating surface, the heat pump, and the temperature sensor or whatever else may be associated thereto may be advantageously set in a small container that does not need (as, instead, in the case of traditional devices) to be kept connected up to a vacuum pump or other control device for eliminating humidity, the reason for this being the modest proportions of the container, which means that any residual humidity contained therein is of a negligible amount and such as not to jeopardize operation of the device.

When the radiating surface and the prism are integral with one another, the container in which the radiating surface is present may be closed at the front by the entrance face itself of the prism so as to reduce the number of optical components, and hence the cost of the device.

Further advantageous characteristics and embodiments of the device for implementing the temperature reference and the IR camera according to the present invention are indicated in the attached claims.

### Brief description of the plate of drawings

The invention will be better understood from the ensuing description and from the attached drawing, which shows practical, non-limiting, embodiments of the invention. In the drawing:
Fig. 1 is a simplified diagram of the optical path in an IR camera;
Fig. 2 is a longitudinal section of a portion of the IR camera in a possible embodiment, with a temperature reference;
Figs. 3 shows an enlargement of the members making up the temperature reference; and
Fig. 4 shows a different embodiment of the temperature reference.

### Detailed description of the invention

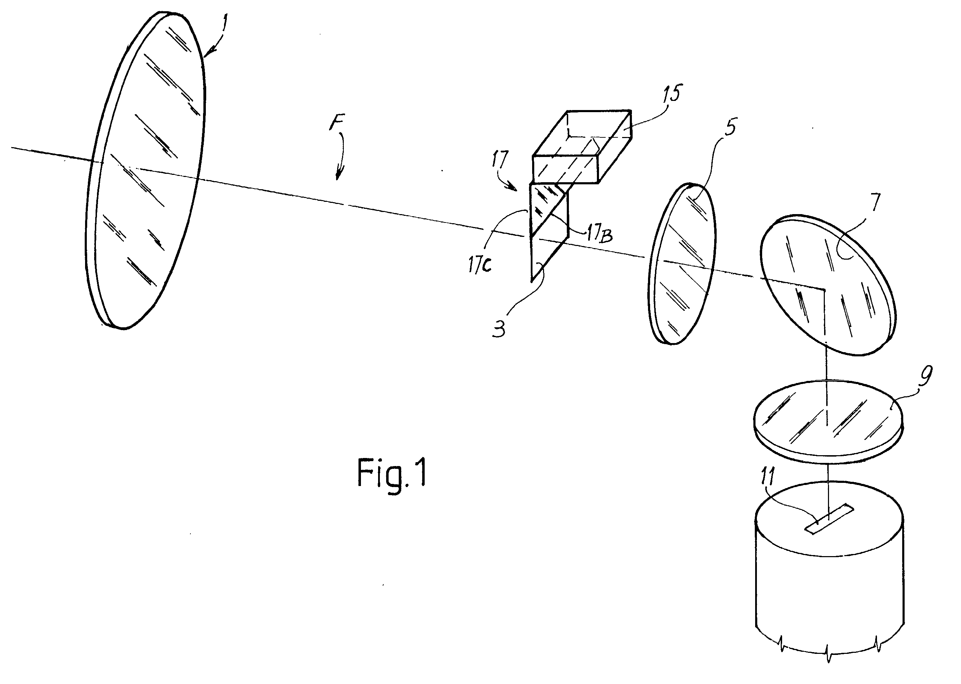

To facilitate understanding of operation of the temperature reference, Fig. 1 is a schematic representation of the typical optical system of an IR camera. The radiation coming from the object is collected by an objective 1, here represented schematically as a single lens, but which, in actual fact, comprises a optical system made up of two or more lenses. The image is focused by the objective in an intermediate focal plane 3. From the focal plane 3 the radiation is collected by a collimator 5 and collimated towards a scanning device 7, here represented by a moving mirror. In practice, as is known, for example, from WO-A-9736420, the scanning device typically comprises two moving mirrors, namely, a scanning mirror proper and an interlacing mirror. The collimator is represented in Fig. 1 by a single lens, but, also in this case as in the case of the entrance objective, the collimator comprises a plurality of lenses.

Downstream of the scanning device, the radiation traverses a second objective 9 and is re-focused onto an array of detectors. The second objective is in practice made up of a plurality of optical components, here omitted and replaced by the schematic representation of a single lens.

All the above elements do not form part of the invention and are in themselves known. A more detailed description of these components can be found in the documents of the prior art previously referred to, and in particular in WO-A-9736420, the contents of which are incorporated into the present description.

Characteristically, according to what is envisaged by the invention, outside the path of the optical beam, designated by F, a container 15 is set, inside which there is a radiating surface, the temperature of which is kept at a controlled value, which may possibly be varied, by means of a heat pump, as will be described in greater detail in what follows. Associated to the container 15 is an optical prism 17. The latter is arranged, with one of its faces, in the focal plane 3. As will appear more clearly from the ensuing description, the radiation coming from the radiating surface inside the container 15 is concentrated in the area of the dihedral edge 17A of the optical prism 17 which is set within the path of the optical beam F. This area of the dihedral edge of the optical prism 17 is perceived by the array of detectors 11 thanks to a movement of overtravel of the scanning mirror 7, in a way known per se. However, unlike what occurs in many traditional devices, it is not the radiating surface that assumes a position directly in the focal plane 3, but rather it is a reflecting surface defined by the face of the optical prism 17 that is arranged in the focal plane 3.

As mentioned previously, some known apparatuses envisage temperature references projected through mirrors. In the present invention, instead, the specular effect is obtained inside the prism 17 by means of the phenomenon of "total reflection". The use of this effect with the connected optical path inside the prism is essential for obtaining the advantages mentioned previously and further discussed in the sequel of this description.

The diagram of Fig. 1 shows a single temperature reference made with a radiating source set in the container 15, and a single optical prism 17. It is, however, to be understood that there may be even two temperature references set on opposite sides of the focal plane 3 and implemented with a typically, but not necessarily, symmetrical arrangement of components.

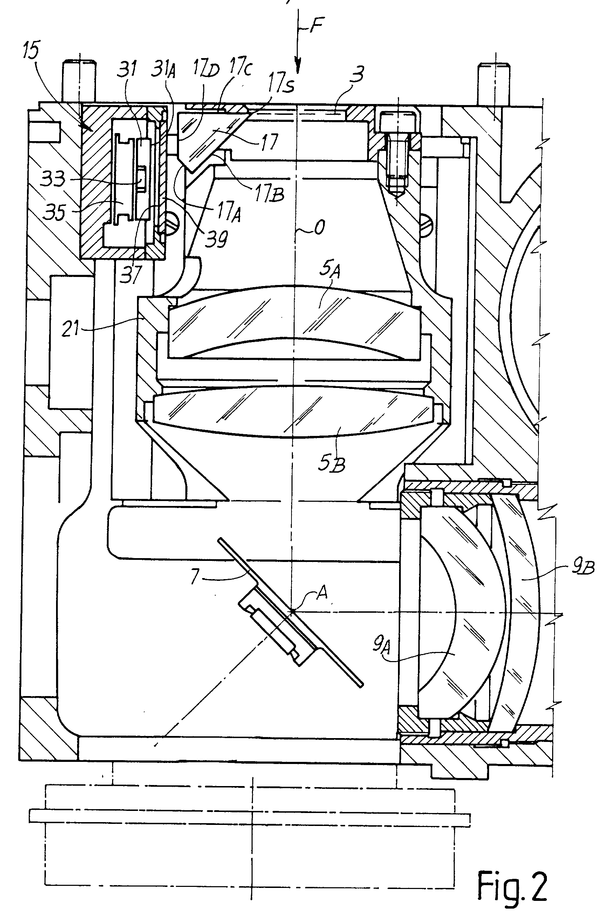

Fig. 2 illustrates, in greater detail, an IR camera comprising a single temperature reference built according to the present invention. Reference numbers that are the same designate parts that are the same as, or that correspond to, the ones schematically represented in Fig. 1.

In Fig. 2, the letter F indicates the direction of entrance of the IR radiation coming from the scene that is being observed by the detecting camera. The beam of IR radiation coming from the external scene passes through the collimator 5, which, in the present example, comprises two lenses 5A and 5B carried by a moving apparatus 21 for focusing. On the beam-exit side of the collimator made up of the lenses 5A, 5B is set the first scanning mirror 7 associated to a system (not illustrated and known per se) which causes oscillatory motion of scanning about an axis orthogonal to the plane of Fig. 2, indicated by the line A. Two additional lenses 9A and 9B are shown in Fig. 2, which form part of the second objective. Downstream of these two lenses are additional optical components and a second oscillating interlacing mirror, as is known from the prior art.

Set upstream of the collimator 5A, 5B is the first objective, represented schematically and designated by 1 in Fig. 1, and not shown in Fig. 2. The focal plane of the first objective is again designated by 3 also in Fig. 2. This entrance objective may constitute a component external to the detecting camera, and may be a commercially available component. In fact, the focal plane 3 may be the entrance point of the beam into the detecting camera, which is equipped with focusing means (moving collimator 5) and with thermal references.

Fixed on the moving apparatus 21 there is the optical prism 17, which thus moves integrally with the lenses 5A and 5B, following the focusing movement. The focusing movement is obtained in a way known per se. The prism 17 has four faces designated by 17A, 17B, 17C, and 17D.

Arranged on the fixed part of the detecting camera, i.e., the part which does not translate together with the moving focusing apparatus 21 is the container 15 inside which there is present a body 31 with a plane surface 31A constituting the radiating surface that emits the reference infrared radiation. The temperature of the body 31 is detected by a temperature sensor 33 inserted inside the body 31 itself. The latter is in thermal contact with a heat pump 35, typically for instance a Peltier-effect heat pump. The face opposite to the one in contact with the body 31 of the Peltier pump is in contact with the rear wall of the container 15, which can be appropriately conformed (for example, with a system of fins) for dissipating the heat outwards.

At the front, the container 15 has a window 37 set in front of the radiating surface 31A of the body 31 and closed by a plane element 39, for example a plate of germanium or other material that is transparent to infrared radiation in the range emitted by the body 31.

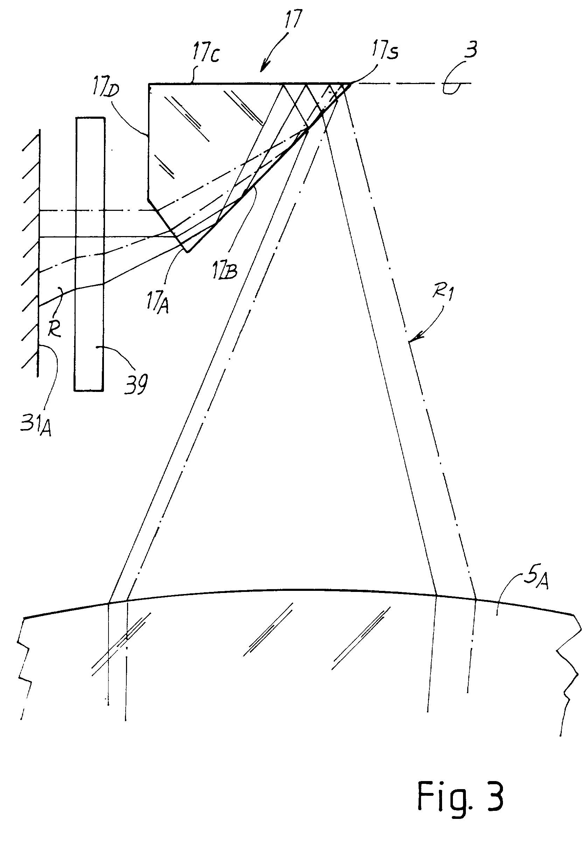

In a way that will be more clearly illustrated with reference to Fig. 3, the radiation emitted by the radiating surface 31A of the body 31 enters the optical prism 17 through the face 17A and is reflected within the optical path F by the face 17C of the optical prism 17.

The faces 17C and 17B of the optical prism 17 form a dihedral edge 17S which is located in the lateral area of the focal plane 3, an area which is under the observation of the array of detectors 11 (not illustrated in Fig. 2) when the scanning mirror 7 is in its position of maximum oscillation in the counterclockwise direction. In the example illustrated in Fig. 1, and in greater structural detail in Fig. 2, the optical prism 17 is just one and is set on one side of the area of observation of the device, and associated to it is a single radiating surface 31A kept at a controlled temperature by means of the heat pump 35. It is, on the other hand, possible to envisage a symmetrical arrangement on the side opposite to the optical axis O of the device whenever it is necessary to have available two thermal references. The use of one or two thermal references depends upon the use for which the IR observation device is designed.

With reference to Fig. 3, it may be noted how one part of the reference IR radiation, designated by R, coming from the surface 31A of the radiating body 31, traverses the closing element 39 of the container 15 and impinges upon the external surface of the face 17A of the optical prism 17. The radiation R is refracted and enters the prism 17 to reach the internal surface of the face 17D of the prism itself. The inclination with which the radiation R reaches the internal surface of the face 17B is such as to obtain a total reflection of the radiation itself towards the internal surface of the third face 17C of the prism. As may be noted in particular in Fig. 3, the radiation R which, arriving from the radiating surface 31 A, reaches the face 17C of the prism 17, is concentrated in the area closest to the dihedral edge 17S.

By way of example, Fig. 3 represents two beams of radiation R coming from the radiating surface 31A, which reach the face 17C in areas, in one case, closest to and, in the other case, furthest away from the dihedral edge 17S, areas which can be observed by means of the scanning operation of the mirror 7 when the latter reaches two distinct angular positions.

The radiation that reaches the internal surface of the face 17C is totally reflected by the latter, and again reaches the internal surface of the second face 17B of the prism 17. The angle at which the radiation reaches, after reflection on the face 17C, the face 17D of the prism is such that it is refracted and exits from the prism to enter the optical path F of the device in a direction parallel to the optical axis O of the latter. The radiation that has undergone the refractions and reflections inside the prism 17 and emerges from the latter to reach the collimator 5 is designated by R1 in Fig. 3.

As emerges clearly from the foregoing description, numerous advantages are achieved by means of the arrangement according to the invention. In the first place, in the focal plane 3 of the device, i.e., in the plane in which the first objective 1 forms the image of the scene under observation, no radiating surface constituting the temperature reference is present. The temperature reference consists of the image of the radiating surface 31A which is reflected by the face 17C of the prism 17 in the proximity of the dihedral edge 17S. This renders possible the elimination - from the optical path of the radiation to be detected - of the system of windows that is typically used in IR cameras for isolating from the outside environment the radiating surfaces that constitute the temperature references. In this case, the radiating surface 31A formed by the body 31 is in the internal compartment of the container 15, which has a very limited volume. Said container 15 can therefore not be associated to systems for extraction of humidity. Along the optical path F of the infrared beam that is to be detected by the array of detectors 11, the windows which constitute components that absorb a share of the infrared radiation, so reducing the sensitivity of the device, are thus eliminated.

Since the container 15 is set in a fixed position and since the prism 17 is integral with the moving apparatus 21, dissipation of the heat through the rear wall of the container which is in thermal contact with the heat pump 35 is considerably facilitated. This increases the dynamics of the device and enables, in this configuration, use of a single thermal reference in many applications, instead of the use of two thermal references.

The reflecting surface 17C of the prism 17 is located on the focal plane 3, whilst the body of the prism 17, the container 15, and whatever is housed inside the latter are located downstream of the focal plane 3 with respect to the path of the beam F entering the detecting camera. This eliminates the presence of components upstream of the focal plane 3 and thus enables the use of objectives of a commercial type, without the need to design special objectives for the IR camera.

As may be noted in particular in Fig. 3, the radiating surface 31A is sufficiently extensive to enable movement of the prism 17, which translates integrally with the moving apparatus 21 for focusing. Notwithstanding this movement of translation, which is in any case limited to a few millimetres, there is always a portion of the radiation R emitted by the surface 31A that penetrates the prism 17 through surfaces 17A and that is consequently, after the refractions and reflections described above, conveyed inside the optical path F.

In addition, as may be noted again from Fig. 3, in the area of the dihedral edge 17S there is concentrated the radiation coming from an extensive portion of the radiating surface 31A. In this way, any lack of uniformity on the radiating surface 31A is averaged out, on the internal surface of the face 17C of the prism 17 and there is generated an image having a substantially uniform intensity.

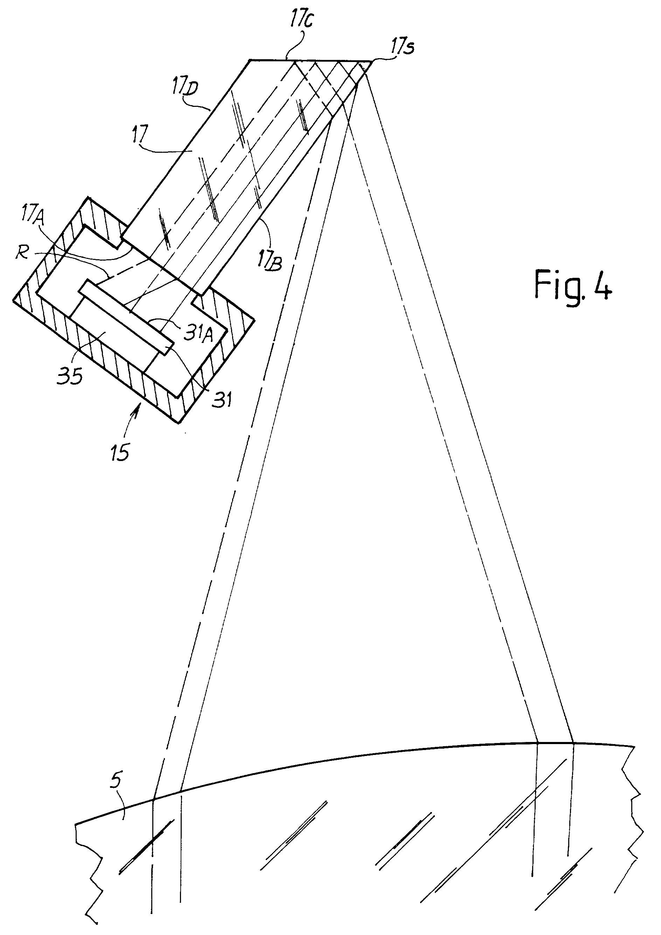

A substantial part of the advantages described above is also maintained in the simplified configuration of Fig. 4. Represented in Fig. 4 are the optical components that may be seen also in Fig. 3, it being understood that said components may be arranged in a corresponding way on the supporting structure illustrated in Fig. 2. In this embodiment, where the same reference numbers designate parts that are the same as, or correspond to, those of the embodiment of Figs. 2 and 3, the prism 17 has an elongated shape and, in addition to constituting the element for reflecting the radiation R coming from the radiating surface 31A, also constitutes the closing element of the container 15 in which the body 31 and the heat pump 35 are set. The radiation-entrance face is again designated by 17A, whilst 17B again designates the face on which the radiation R, refracted through the face 17A, is reflected, to be then directed to the third face 17C of the prism. From here the radiation is reflected and refracted through the surface 17D in the proximity of the dihedral edge 17S.

As compared to the embodiment illustrated in Figs. 2 and 3, the configuration of Fig. 4 has one component less, namely the closing element 39 for closing the container 15. This means a reduction in the production costs but entails a limitation due to the fact that the container 15 is in this case integral with the prism 17. If the latter is mounted on a moving focusing apparatus 21, focusing entails integral translation of the container 15. In this case, the advantages deriving from the arrangement in a fixed position of the container 15, and more in particular, the greater efficiency in the dissipation of the heat generated by the heat pump 35 towards the outside environment, are lost. The latter advantage is not lost when the device does not have moving parts for focusing. In this case, both the prism 17 and the container 15 are set in a fixed position together with the optical elements of the collimator 5.

It is understood that the drawing only illustrates an exemplification of the invention given purely to provide a practical demonstration of said invention, which may vary in its embodiments and arrangements without thereby departing from the scope of the underlying idea.

## Claims

1. A device for implementing a temperature reference in an infrared-radiation detecting camera comprising a radiating surface (31A) which is kept at a controlled temperature, **characterized by** a prism (17) which receives a radiation from said radiating surface and reflects it according to a direction that is inclined with respect to said radiating surface towards a detecting optical path.

2. The device according to Claim 1, **characterized in that** said radiating surface (31A) is associated to a heat pump (35) which maintains said radiating surface at a controlled temperature.

3. The device according to Claim 1 or Claim 2, **characterized in that** the radiation coming from said radiating surface undergoes, while traversing said prism, at least one total refraction and one total reflection.

4. The device according to Claim 1, Claim 2, or Claim 3, **characterized in that** said prism has at least three faces (17A, 17B, 17C), of which a first face (17A) for entrance of the radiation emitted from the radiating surface and a second face (17B) for exit of the radiation that is totally reflected inside the prism.

5. The device according to one or more of the foregoing claims, **characterized in that** said radiating surface is set, with respect to the reflecting surface of the prism on which the last reflection of the radiation coming from said radiating surface takes place, fully on the side of exit of the radiation from the prism.

6. The device according to Claim 4 or Claim 5, **characterized in that** the inclinations of the first face, second face, and third face of the prism are such that the radiation coming from the radiating surface is concentrated in the proximity of the dihedral edge (17S) formed by the second face (17B) and the third face (17C) of the prism.

7. The device according to one or more of the foregoing claims, **characterized in that** said prism (17) has a first entrance face (17A) through which the radiation coming from said radiating surface (31A) enters; a second face (17B) forming, with said first face, an angle of aperture whereby the radiation refracted by the first face (17A) is reflected by the internal surface of the second face (17B) towards the third face (17C) of said prism, said third face (17C) forming, with the second face (17B), an angle such that the radiation reflected by the internal surface of the second face (17B) towards the third face (17C) is reflected by the internal surface of the latter towards the second face at an angle such that said radiation is refracted by the second face (17B) and comes out of the prism.

8. The device according to one or more of the foregoing claims, **characterized in that** the direction of exit of the radiation reflected by said prism is approximately orthogonal to the direction of the radiation entering said prism.

9. The device according to one or more of the foregoing claims, **characterized in that** said radiating surface (31A) is housed in a container (15) integral with said prism, with an exit window (37) for said radiation emitted by the radiating surface, said window being closed by one face of said prism.

10. The device according to one or more of Claims 1 to 8, **characterized in that** said radiating surface (31) is housed in a container (15) with a window (37) for exit of the radiation emitted from the radiating surface, said window being closed by a component (39) that is separate from said prism.

11. An infrared-radiation detecting camera, **characterized in that** it comprises at least one device for implementing a temperature reference according to one or more of Claims 1 to 10.

12. An infrared-radiation detecting camera, comprising:
• an optical path with at least one collimator (5) and one scanning mirror (7);
• infrared-radiation detecting means (11); and
• at least one temperature reference with a radiating surface (31A) at a controlled temperature;
**characterized in that** said temperature reference comprises a reflecting prism (17) which receives a radiation emitted from said radiating surface and reflects it in the optical path towards said detecting means (11).

13. The infrared-radiation detecting camera according to Claim 12, **characterized in that** said radiating surface is associated to a heat pump (35) which maintains the radiating surface at a controlled temperature.

14. The infrared-radiation detecting camera according to Claim 12 or Claim 13, **characterized in that** the radiation coming from said radiating surface undergoes, in said prism, at least one total refraction and one total reflection.

15. The infrared-radiation detecting camera according to Claim 12, Claim 13, or Claim 14, **characterized in that** said prism has at least three faces (17A, 17B, 17C), of which a first face (17A) for entrance of the radiation emitted from the radiating surface and a second face (17B) for exit of the radiation that is reflected inside the prism.

16. The infrared-radiation detecting camera according to one or more of Claims 12 to 15, **characterized in that** said prism (17) has a first entrance face (17A) through which at least one part of the radiation coming from said radiating surface (31A) enters; a second face (17B) forming, with said first face, an angle of aperture whereby the radiation refracted by the first face (17A) is reflected by the internal surface of the second face (17B) towards the third face (17C) of said prism, said third face (17C) forming, with the second face (17B), an angle such that the radiation reflected by the internal surface of the second face (17B) towards the third face (17C) is reflected by the internal surface of the latter towards the second face at an angle such that said radiation is refracted by the second face (17B) and comes out of the prism.

17. The infrared-radiation detecting camera according to one or more of Claims 12 to 16, **characterized in that** the reflecting face (17C) of the prism (17) on which the last reflection of the radiation takes place before the radiation comes out of the prism lies on a focal plane (3) of an entrance objective (1).

18. The infrared-radiation detecting camera according to Claim 17, **characterized in that** the radiating surface is fully arranged, with respect to the focal plane (3) of the entrance objective (1), on the side opposite to that of entrance of the radiation coming from the environment and picked up by said entrance objective.

19. The infrared-radiation detecting camera according to one or more of Claims 12 to 18, **characterized in that** the direction of exit of the reflected radiation is approximately orthogonal to the direction of the radiation entering said prism.

20. The infrared-radiation detecting camera according to one or more of Claims 12 to 19, **characterized in that** said prism has a dihedral edge (17S) formed by the exit face (17B) of the reflected radiation and by the face (17C) on which the last reflection of the radiation takes place before the radiation comes out of the prism, said dihedral edge lying in a position corresponding to the edge of the image detected by said camera.

21. The infrared-radiation detecting camera according to one or more of Claims 12 to 20, **characterized in that** said radiating surface (31A) is housed in a container (15) integral with said prism, with an exit window (37) for said radiation emitted by the radiating surface, said window being closed by one face of said prism.

22. The infrared-radiation detecting camera according to one or more of Claims 12 to 20, **characterized in that** said radiating surface (31A) and said heat pump are set in a container (15) with a window (37) closed by a component (39) separate from said prism.

23. The infrared-radiation detecting camera according to Claim 22, **characterized in that** said container (15) is fixed with respect to the detecting camera, and **in that** said prism (17) is mobile together with at least one part of the optical components of said camera to enable focusing of the image picked up by said detecting camera.
